# EUROPEAN PATENT APPLICATION

(11) **EP 1 940 113 A2**
(43) Date of publication of application: **02.07.2008**
(21) Application number: 07254832.4
(22) Date of filing: 12.12.2007
(51) Int. Cl.: H04L 29/06, H04L 29/12, H04M 7/00, H04L 29/08, H04M 1/253

(54) **Determining pairings of telephone numbers and IP addresses from caching and peer-to-peer lookup**

(30) Priority: 30.12.2006 US 618739
(71) Applicant: ArcSoft (Shanghai) Technology Company, Ltd., Shanghai 200041 (CN)
(72) Inventor: Chen, Dongren, 200237 Shanghai (CN); Hu, Guang, 200240 Shanghai (CN)
(74) Representative: Exell, Jonathan Mark

(57) **Abstract**

A method for a first device (102) to communicate with a second device (104) over a public computer network (106) includes detecting a user dialing a telephone number of the second device and searching a pairing list (103) for a pairing including the telephone number and an IP address of the second device. If the pairing is found in the pairing list (103), the method then includes using the IP address in the pairing to establish a computer network connection with the second device (104) over the public computer network and exchanging data packets with the second device (104). If the pairing is not found in the pairing list (103), the method then includes using a peer-to-peer lookup protocol to find the pairing. If the pairing is not found using the peer-to-peer lookup protocol, the method then includes establishing a telephone connection with the second device (104) over a telephone network (108) to receive the IP address.

## Description

This application is related to U.S. Application No. 11/280,688 entitled "Using PSTN to Communicate IP Addresses for Point-to-Point Text, Voice, Video, or Data Communication," which is commonly assigned and incorporated herein by reference.

This application is related to European patent application entitled "Regional Service by Phone," agent's ref: JE/N21845, and European patent application entitled "Using Second Channel to Communicate IP Address for Point-to-Point Text, Voice, Video, or Data communication," agent's ref: JE/N21846 which are concurrently filed, commonly assigned, and incorporated herein by reference.

### FIELD OF INVENTION

This invention relates to methods for determining pairings of telephone numbers and IP addresses of devices for point-to-point communication over a public computer network.

### DESCRIPTION OF RELATED ART

In U.S. Patent Application Serial No. 11/280,688, entitled "Using PSTN to Communicate IP Addresses for Point-to-Point Text, Voice, Video, or Data Communication," filed on November 15, 2005, discloses a method for using the public switched telephone network (PSTN) to exchange Internet Protocol (IP) addresses for point-to-point communication between two devices over a public computer network (e.g., the Internet). In one example, a first device uses the PSTN to send its IP address to a second device to setup a network connection over the public computer network. The second device then sends a network connection request to the first device over the public computer network using the IP address. Once the network connection has been established, the first and the second devices exchange data packets carrying text, voice, video, or data communications between their users.

### BRIEF DESCRIPTION OF THE DRAWINGS

Figs. 1 and 2 illustrate a system for point-to-point communication between devices in one embodiment of the invention.

Fig. 3 is a flowchart of a method for devices to exchange IP addresses and save them in pairing lists in one embodiment of the invention.

Fig. 4 illustrates another system for point-to-point communication between devices in one embodiment of the invention.

Fig. 5 is a flowchart of a method with multiple ways for devices to exchange IP addresses in one embodiment of the invention.

Fig. 6 is a flowchart of a method for a device to join a peer-to-peer network for distributed storing and sharing pairing list in one embodiment of the invention.

Fig. 7 is a flowchart of a method for devices to exchange IP addresses without a public switched telephone network in one embodiment of the invention.

Use of the same reference numbers in different figures indicates similar or identical elements.

### SUMMARY

In one embodiment of the invention, a method for a first device to communicate with a second device over a public computer network includes detecting a user dialing a telephone number of the second device and searching a pairing list for a pairing including the telephone number and an IP address of the second device. If the pairing is found in the pairing list, the method then includes using the IP address in the pairing to establish a computer network connection with the second device over the public computer network and exchanging data packets with the second device. If the pairing is not found in the pairing list, the method then includes using a peer-to-peer lookup protocol to find the pairing. If the pairing is not found using the peer-to-peer lookup protocol, the method then includes establishing a telephone connection with the second device over a public switched telephone network to receive the IP address.

In one embodiment, the method further includes sending the pairing to the second device and receiving a pairing of a telephone number and an IP address of the first device from the second device through the computer network connection.

In one embodiment, a method for a first device to communicate with a second device over a public computer network includes joining a peer-to-peer lookup network having nodes with pairings of telephone numbers and IP addresses and joining a subgroup in the peer-to-peer lookup network based on at least one of direct past communications with other devices, geographic location, and business relationship. The method further includes detecting a user dialing a telephone number of the second device, searching a pairing list at the first device for a pairing including the telephone number and an IP address of the second device. If the pairing is not found in the pairing list, the method then includes using a peer-to-peer lookup protocol to find the pairing through the nodes of the peer-to-peer lookup network, saving the pairing in the pairing list, using the IP address in the pairing to establish the computer network connection and exchange data packets with the second device over the public computer network.

### DETAILED DESCRIPTION

U.S. Patent Application Serial No. 11/280,688 discloses a method for using the public switched telephone network (PSTN) to exchange IP addresses for point-to-point communication between two devices over a public computer network.

As many users have static IP addresses, a method for remembering the static IP addresses is proposed in embodiments of the invention. The method requires a first Voice over Internet Protocol (VoIP) gateway or telephone adapter to determine whether a dialed telephone number matches a pairing of a telephone number and an IP address in memory so the first VoIP gateway directly connects and transfer data with a second VoIP gateway without exchanging IP addresses with the second VoIP gateway through the PSTN. The method significantly saves the connection fees and the time incurred for exchanging IP addresses when dialing long distance telephone calls.

Furthermore, considering that a VoIP gateway cannot always match a dialed telephone number to an IP address because dynamic IP addresses will change from time to time, a method for caching the IP addresses is proposed in embodiments of the invention. The method takes advantage of the fact that dynamic IP addresses do remain the same for some time between changes.

Peer-to-peer networking, such as Chord ring using a distributed hash table (DHT), allows distributed storage and sharing of data. A method for using peer-to-peer networking to store and share pairings of telephone numbers and IP addresses for communication between VoIP gateways over a public computer network is proposed. With the distributed storage and sharing of the pairings, VoIP gateways may achieve a connection without using a PSTN to exchange IP addresses.

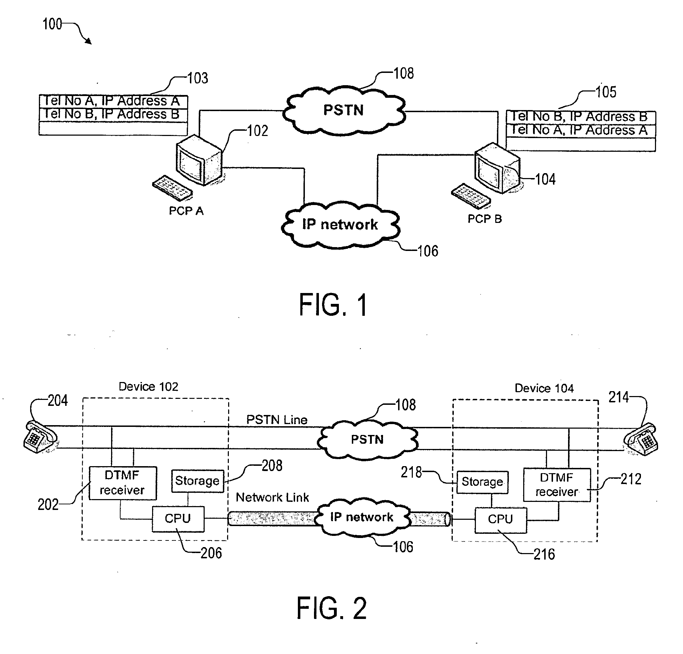

Fig. 1 illustrates a system 100 for establishing communication between VoIP gateways 102 and 104 in one embodiment of the invention. VoIP gateways 102 and 104 are connected by a public computer network 106 (e.g., the Internet) for exchanging data packets through a network connection. VoIP gateways 102 and 104 are also connected by a PSTN 108 to exchange IP addresses to establish the network connection over public computer network 106.

Fig. 2 illustrates additional details of VoIP gateways 102 and 104 in one embodiment of the invention. VoIP gateway 102 includes a dual-tone multifrequency (DTMF) or frequency-shift keying (FSK) receiver 202 coupled to PSTN lines from a plain old telephone service (POTS) telephone 204 to PSTN 108. DTMF receiver 202 detects the telephone numbers dialed by the user. A processor 206 is coupled to DTMF receiver 202 to receive the telephone numbers dialed by the user. Processor 206 is also coupled to a memory 208 for storing a pairing list 103 (Fig. 1) with pairings of telephone numbers and IP addresses of various devices the user may call. Memory 208 also stores the VoIP software. Memory 208 can be a flash memory or a hard disk. In another embodiment, VoIP gateway 102 is integrated with POTS telephone 204 to have a form factor of a conventional telephone.

Similarly, VoIP gateway 104 includes a DTMF receiver 212 coupled to PSTN lines from a POTS telephone 214 to PSTN 108. A processor 216 is coupled to DTMF/FSK receiver 212 to receive the dialed telephone numbers. Processor 216 is also coupled to a memory 218 for storing a pairing list 105 (Fig. 1) with pairings of telephone numbers and IP addresses of various devices the user may call. Memory 218 also stores the VoIP software. In another embodiment, VoIP gateway 102 is integrated with POTS telephone 204 to have a form factor of a conventional telephone.

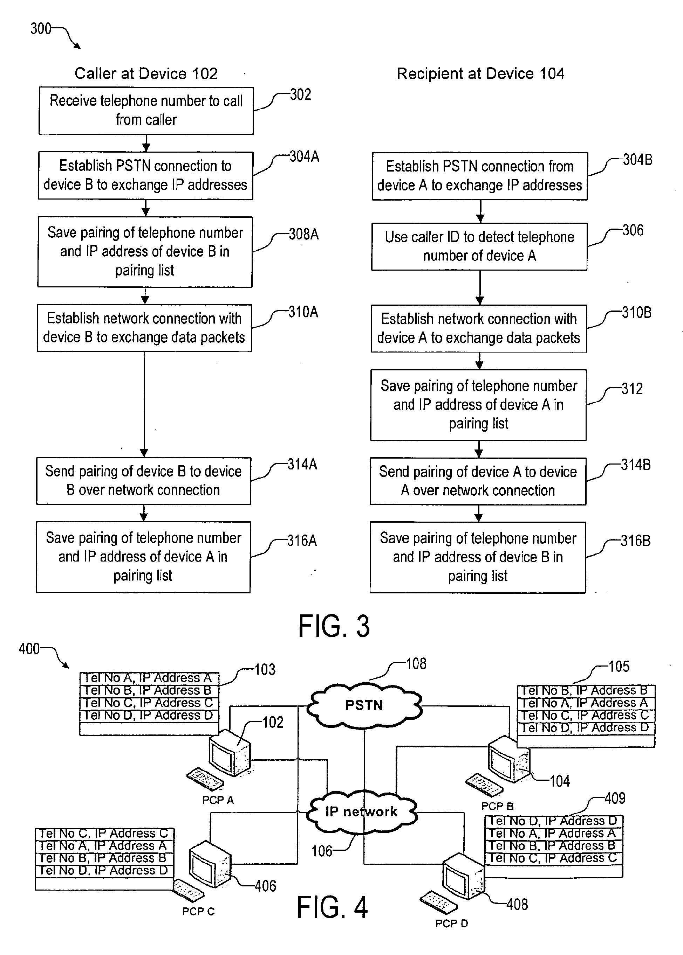

Fig. 3 illustrates a method 300 for system 100 to cache IP addresses and then use the IP addresses to establish a network connection over public computer network 106 in one embodiment of the invention. The actions of VoIP gateway 102 are shown on the left while the actions of VoIP gateway 104 are shown on the right. Related actions between devices 102 and 104 are labeled with the same reference number but different reference letters.

Referring first to the actions of VoIP gateway 102, in step 302, VoIP gateway 102 intercepts the telephone number dialed by a caller on telephone 204. Specifically, DTMF/SFK receiver 202 detects the telephone number dialed by the caller.

In step 304A, VoIP gateway 102 uses the detected telephone number to establish a telephone connection with VoIP gateway 104 over PSTN 108 so VoIP gateways 102 and 104 can exchange their IP addresses. VoIP gateways 102 and 104 may exchange their IP addresses using a series of standard touch-tones with or without a redundancy check (e.g., a checksum). VoIP gateways 102 and 104 may also exchange their IP addresses by each dialing the other device and including the IP address in the touch-tones used to dial out on PSTN 108. In this case, PSTN 108 uses the telephone number to ring the other device and then transmits a modem message with the IP address using DTMF or FSK signaling between telephone rings. For more detail, please refer to U.S. Patent Application Serial No. 11/280,688.

In step 308, VoIP gateway 102 caches the pairing of the telephone number and the IP address of VoIP gateway 104 in its pairing list 103 (Fig. 1). VoIP gateway 102 uses caching to store pairings for telephone numbers that are likely to be dialed again and discards pairings for telephone numbers that are not likely to be dialed. Specifically, processor 206 caches the pairing in pairing list 103 located in memory 208.

Note that for a telephone call to a VoIP gateway 104 located in the same country but a different area code, or in the same country and the same area code, the detected telephone number will only have part of the complete telephone number in the E.164 format. For example, for a call to a device 104 in the same area code, the detected telephone number would only have XXX-YYYY without the country and the area codes. In this case, VoIP gateway 102 uses a WHOIS query to determine the geographic location of VoIP gateway104 from its IP address. From the geographic location, VoIP gateway 102 determines the any missing codes in the telephone number.

In step 310A, VoIP gateway 102 establishes a computer network connection with device 104 over public computer network 106 to exchange data packets. The data packets may carry text, voice, video, or data communication.

In step 314A, VoIP gateway 102 sends the pairing of telephone number and IP address of VoIP gateway 104 in a packet to VoIP gateway 104 so it can include its own pairing in its pairing list 105 (Fig. 1).

In step 316A, VoIP gateway 102 receives the pairing of telephone number and IP address of itself in a packet from VoIP gateway 104 so VoIP gateway 102 can include its own pairing in its pairing list 103.

Referring now to the actions of VoIP gateway 104, in step 304B, VoIP gateway 104 establishes a telephone connection with VoIP gateway 102 over PSTN 108 so VoIP gateways 102 and 104 can exchange their IP addresses. VoIP gateway 104 may send its IP address to VoIP gateway 102 and receive the IP address of VoIP gateway 102 from VoIP gateway 102. This corresponds to action 304A described above.

In step 306, VoIP gateway 104 uses caller ID to detect the telephone number of device 102 from their telephone connection. Specifically, DTMF/SFK receiver 212 detects the caller ID from the PSTN line.

In step 310B, VoIP gateway 104 establishes a computer network connection with VoIP gateway 102 over public computer network 106 to exchange data packets. This corresponds to action 310A described above.

In step 312, VoIP gateway 104 caches the pairing of the telephone number and the IP address of VoIP gateway 102 in its pairing list 105 (Fig. 1). Specifically, processor 216 stores the pairing in pairing list 105 located in memory 218.

In step 314B, VoIP gateway 104 sends the pairing of telephone number and IP address of VoIP gateway 102 in a packet to VoIP gateway 102 so it can include its own pairing in its pairing list 103 (Fig. 1). This corresponds to action 314A described above.

In step 316B, VoIP gateway 104 receives the pairing of telephone number and IP address of itself in a packet from VoIP gateway 102 so VoIP gateway 104 can include its own pairing in its pairing list 105. This corresponds to action 316A described above.

Although method 300 is described for a system 100 with two VoIP gateways, the same method may be applied to a system 400 with additional devices as shown in Fig. 4. For example, method 300 may be used with VoIP gateways 102, 104, 406, and 408 to generate respective pairing lists 103, 105, 407, and 409. However, the pairing list becomes large as the number of VoIP gateways in the system increases. Thus, what is needed is a method to handle the pairings of a large number of VoIP gateways.

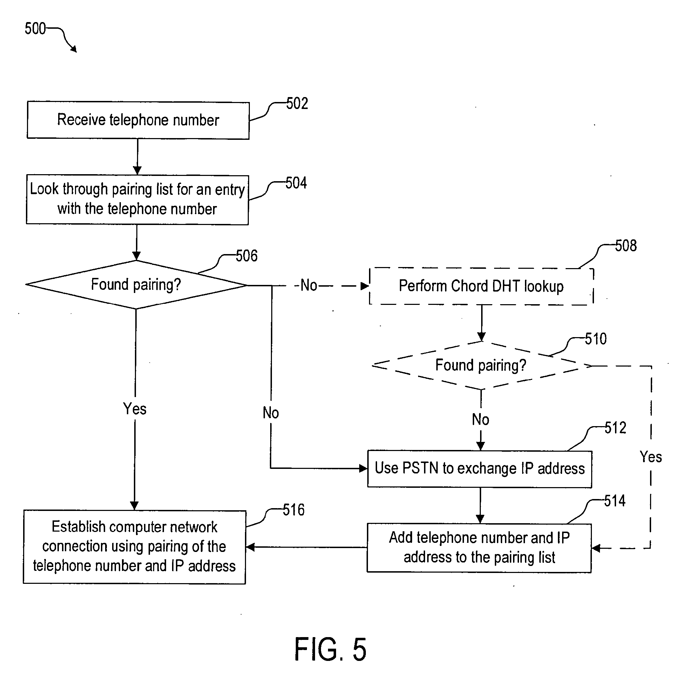

Fig. 5 illustrates a method 500 for a VoIP gateway (e.g., VoIP gateway 102) to use multiple ways to determine the IP address of another VoIP gateway (e.g., VoIP gateway 104) so they can establish a network connection over public computer network 106 in one embodiment of the invention.

In step 502, VoIP gateway 102 intercepts the telephone number dialed by a caller on telephone 204. Specifically, DTMF/FSK receiver 202 determines the telephone number dialed by the caller. Step 502 is followed by step 504.

In step 504, VoIP gateway 102 searches its pairing list 103 for a pairing having the telephone number dialed by the user. Step 504 is followed by step 506.

In step 506, VoIP gateway 102 determines if the pairing is found. If the pairing is not found, then step 506 is followed by step 508 or step 512. Step 506 is followed by step 508 if VoIP gateway 102 participates in a peer-to-peer lookup network for distributed storage and sharing of pairing lists because the system (e.g., system 400 in Fig. 4) has many VoIP gateways. Step 506 is followed by step 512 if VoIP gateway 102 does not participate in such a peer-to-peer lookup network because system 400 has only a few VoIP gateways. If the pairing is found, step 506 is followed by step 516.

In step 508, VoIP gateway 102 performs peer-to-peer lookup to find a node in a peer-to-peer network that has the pairing. In one embodiment, the VoIP gateways form nodes in a Chord ring. IP addresses of the nodes are hashed by the SHA-1 (Secure Hash Algorithm) function of the Chord protocol to form node identifiers, and telephone numbers of the nodes are hashed by the SHA-1 function to form key identifiers. In the Chord ring, each pairing of telephone number (i.e., a key) and IP address is assigned to a successor node whose node identifier is equal to or follows the key identifier.

When a node joins the Chord ring, it provides the pairing of its own telephone number and IP address from its paring list to the appropriate successor node. The node then uses the Insert(Key) function of the Chord protocol to send the other pairings in its pairing list to the appropriate successor nodes. Thus, each node in the Chord ring has (1) its own pairing, (2) a cached pairing list, and (3) a pairing list for Chord ring operations (e.g., Insert(key) and Lookup(key)).

VoIP gateway 102 uses the Lookup(key) function of the Chord protocol to determine a key identifier for the dialed telephone number and its finger table to directly or indirectly (through other nodes) locate the successor node storing the pairing. VoIP gateway 102 then queries the successor node for the IP address that corresponds to the dialed telephone number.

In addition to storing the pairings of telephone numbers and IP addresses, the nodes in the Chord ring can also stores serial numbers, MAC addresses, and other related information for verification, authorization, and other security purposes. Alternatively, a central registration node stores this information for verification, authorization, and other security purposes. Step 508 is followed by step 510.

In step 510, VoIP gateway 102 determines if the pairing is found through the peer-to-peer lookup. If not, then step 510 is followed by step 512. If the pairing is found, step 510 is followed by step 514.

In step 512, VoIP gateway 102 uses PSTN 108 to exchange IP addresses with VoIP gateway 104 as described above in the steps of method 300 (Fig. 3). Step 512 is followed by step 514.

In step 514, VoIP gateway 102 caches the pairing of telephone number and IP address of VoIP gateway 104 in its pairing list 103 (Fig. 1). Step 514 is followed by step 516.

In step 516, VoIP gateway 102 establishes a computer network connection with VoIP gateway 104 over public computer network 106 to exchange data packets. The data packets may carry text, voice, video, or data communication. VoIP gateways 102 and 104 also exchange their respective pairings as described above in the steps of method 300 (Fig. 3).

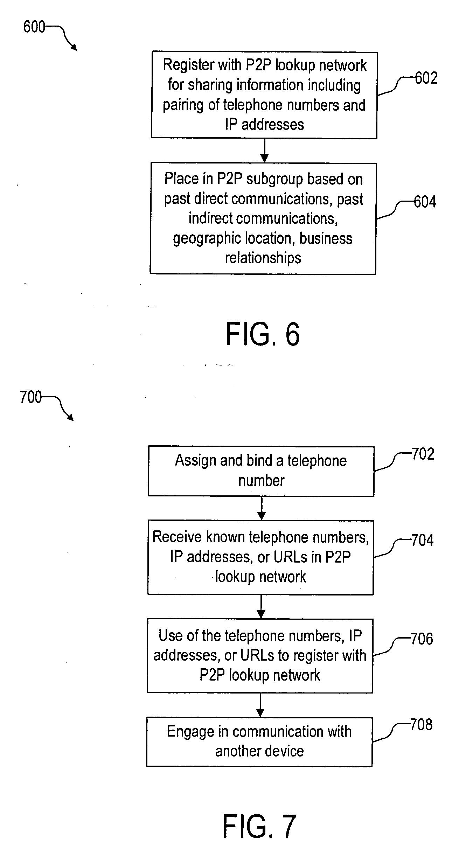

Fig. 6 illustrates a method for a VoIP gateway (e.g., VoIP gateway 102) to join a peer-to-peer lookup system in one embodiment of the invention.

In step 602, VoIP gateway 102 joins a peer-to-peer network for distributed storing and sharing pairing lists. In one embodiment, the peer-to-peer network is implemented with a Chord ring where IP addresses of the nodes are hashed by the SHA-1 (Secure Hash Algorithm) function to form node identifiers, and telephone numbers of the nodes are hashed by the SHA-1 function to form key identifiers. One or several methods may be used by VoIP gateway 102 to find and join the peer-to-peer network.

VoIP gateway 102 contacts a central registration node of the Chord ring with one or more web URLs or IP addresses and then joins the Chord ring.

VoIP gateway 102 can call a central registration telephone number or a telephone number of a node known to be in the Chord ring and then joins the Chord ring.

VoIP gateway 102 can actively scan a range of IP addresses for nodes in the Chord ring and then join the Chord ring.

Alternatively, VoIP gateway 102 can join the peer-to-peer network when a node in the Chord ring actively scans a range of IP addresses for other nodes to join the Chord ring. Such a node may act to gather smaller Chord rings into a larger Chord rings.

Except for the first two registration methods, the other registration methods may cause additional delay because VoIP gateway 102 has to search for the peer-to-peer network or the peer-to-peer network has to search for VoIP gateway 102. Note that VoIP gateway 102 reregisters with the peer-to-peer network each time VoIP gateway 102 is turned on or the network connection to public computer network 106 is down so that the first two methods allow VoIP gateway 102 to be ready faster than the other registration methods.

In step 604, VoIP gateway 102 joins one or more subgroups in the peer-to-peer network depending on the interest of the user. In one embodiment, VoIP gateway 102 joins a subgroup using the Diminished Chord protocol where the subgroup is associated with an identifier X. In the Diminished Chord protocol, the nodes in the subgroup save additional info that forms a tree with a root for Insert(X, node) and Lookup(X, node). There are many types of subgroups that can be formed and some are described hereafter.

VoIP gateway 102 may join a subgroup based on direct past communication. For example, devices A, B, and C that have had direct communication with device D may join a subgroup of devices that have directly communicated with device D. Business and government agencies may use these subgroups to develop relational type of services, such as finding friends of friends to collect information for commercial purposes. For example, a business may investigate a family to determine their friends. Assume that and the business determines that individuals A, B, and C have had direct communication with family member D. Based on this, the business can assume that individuals A, B, and C are friends of family member D.

Indirect past communication may also be determined from the subgroups of direct past communications. This may be useful to develop relational type of services, such as finding people with common interests or for investigating for collecting information on their common interests.

Assume individual A0's family and friends include individuals A1, A2, A3 ... An, otherwise noted as A[1 ... n], because individuals A1, A2, A3 ... An all have had direct communication with individual A0. Assume the same is true for individuals B0, C0, D0 with their subgroups of B[1 ... n], C[1 ... n], and D[1 ... n]. At the same time, assume that individual B0 is one of individuals in subgroup A[1 ... n] (e.g., B0 is A3), individual C0 is the one of individuals in subgroup B[1 ... n] (e.g., C0 is B3), and individual D0 is the one of the individuals in subgroup C[1 ... n] (e.g., D0 is C3).

In one example, if both individuals A0 & D0 are evolved in a police investigation, the police could search from subgroups A[1 ... n], B[1 ... n], C[1 ... n], and D[1 ... n] and determine that B0 is A3 and C0 is B3. Such a finding shows individuals B0 and C0 bridge the relationship between individuals A0 and D0 and the police can focus some of their attention on individuals B0 and C0.

In another example, assume individuals A0 and D0 are members of a basketball league in New York. A basketball manufacturer wants to sell basketball to other people interested in basketball. The company can search from subgroups A[1 ... n], B[1 ... n], C[1 ... n], and D[1 ... n] and determine that B0 is A3 and C0 is B3. As B0 and C0 bridge individuals A0 and D0, they may also be interested in basketball so the company can target them for their products.

VoIP gateway 102 may join a subgroup based on geographic location. For example, devices and A and B having the same country and area codes join a subgroup of devices having the same country and area codes.

VoIP gateway 102 may join a subgroup based on a business relationship. In one example, devices A and B provide the same service so they join a subgroup for devices that provide that service. In another example, devices A and B wish to receive the same service from join a subgroup of devices that wish to receive that service.

Fig. 7 illustrates a method 700 for a VoIP gateway (e.g., VoIP gateway 102) to determine the IP of another VoIP gateway (e.g., VoIP gateway 104) to establish a network connection over public computer network 106 without using the PSTN in one embodiment of the invention.

In step 702, VoIP gateway 102 is bound to a telephone number assigned by the phone company. VoIP gateway 102 uses a WHOIS query to determine any missing codes in the telephone number.

In step 704, VoIP gateway 102 retrieves from memory 208 an initial pairing list with preset telephone numbers and IP addresses/URLs of devices in a peer-to-peer network for distributed storing and sharing of pairing lists. This initial list is programmed into memory 208 by the manufacturer of VoIP gateway 102.

In step 706, VoIP gateway 102 uses one of the telephone numbers or IP addresses in the pairing list to register with the peer-to-peer network.

In step 708, VoIP gateway 102 engages in a network connection with any device in the peer-to-peer network to exchange data packets for text, voice, video, or data communication.

The disclosures in United States patent application no. 11/618,739, from which this application claims priority, and in the abstract accompanying this application are incorporated herein by reference.

## Claims

1. : A method for a first device to communicate with a second device over a public computer network, comprising:
detecting a user dialing a telephone number of the second device;
searching a pairing list cached at the first device for a pairing including the telephone number and an IP address of the second device;
if the pairing is found in the pairing list:
using the IP address in the pairing to establish a computer network connection with the second device over the public computer network; and
exchanging data packets with the second device through the computer network connection.

2. : The method of claim 1, further comprising:
if the pairing is not found in the pairing list:
using a peer-to-peer lookup protocol to find the pairing through nodes of a peer-to-peer lookup network;
saving the pairing in the pairing list;
using the IP address in the pairing to establish the computer network connection with the second device over the public computer network; and
exchanging the data packets with the second device through the computer network connection.

3. : The method of claim 2, wherein the peer-to-peer lookup protocol comprises Chord and the telephone number is used as a key to determine a successor node in a Chord ring with the pairing.

4. : The method of claim 2 or 3, further comprising:
if the pairing is not found using the peer-to-peer lookup protocol:
using the telephone number to establish a telephone connection with the second device over a telephone network;
receiving the IP address from the second device through the telephone connection;
saving the pairing in the pairing list;
using the IP address to establish the computer network connection with the second device over the public computer network; and
exchanging the data packets with the second device through the computer network connection.

5. : The method of claim 4, further comprising determining at least one of a country code and an area code of the telephone number from the IP address.

6. : The method of claim 4 or 5, wherein said exchanging the data packets includes sending the pairing to the second device.

7. : The method of claim 5, wherein said exchanging the data packets comprises receiving another pairing of another telephone number and another IP address of the first device from the second device.

8. : A method for a first device to communicate with a second device over a public computer network, comprising:
detecting a user dialing a telephone number of the second device for a first time;
using the telephone number to establish a telephone connection with the second device over a telephone network;
receiving an IP address of the second device through the telephone connection;
saving a pairing of the telephone number and an IP address of the second device in a pairing list at the first device;
using the IP address to establish the computer network connection with the second device over the public computer network; and
sending the pairing to the second device through the computer network connection.

9. : The method of claim 8, further comprising receiving another pairing of another telephone number and another IP address of the first device from the second device through the computer network connection.

10. : The method of claim 9, wherein the second device determines said another telephone number using caller ID from the telephone connection.

11. : The method of claim 9 or 10, further comprising:
detecting the user dialing the telephone number for a second time;
searching the pairing list for the telephone number to retrieve the pairing;
using the IP address in the pairing to establish a computer network connection with the second device over the public computer network; and
exchanging data packets with the second device through the computer network connection.

12. : The method of claim 11, prior to said detecting the user dialing the telephone number for a second time, further comprising determining at least one of a country code and an area code of the telephone number from the IP address.

13. : A method for a first device to communicate with a second device over a public computer network, comprising:
joining a peer-to-peer lookup network, each node in the peer-to-peer lookup network storing a pairing list including pairings of telephone numbers and IP addresses;
detecting a user dialing a telephone number of the second device;
searching a local pairing list at the first device for a pairing including the telephone number and an IP address of the second device;
if the pairing is not found in the local pairing list:
using a peer-to-peer lookup protocol to find the pairing through the nodes of the peer-to-peer lookup network;
saving the pairing in the pairing list;
using the IP address in the pairing to establish the computer network connection with the second device over the public computer network; and
exchanging the data packets with the second device through the computer network connection.

14. : The method of claim 13, wherein the peer-to-peer lookup protocol comprises Chord and the telephone number is used as a key to determine a successor node in a Chord ring with the pairing.

15. : The method of claim 13 or 14, further comprising:
joining a subgroup in the peer-to-peer lookup network, wherein the subgroup is based a criterion on at least one of direct past communications with other devices, geographic location, and business relationship.

16. : The method of claim 15, wherein the peer-to-peer lookup protocol comprises Diminished Chord and the criterion is used as a key to determine a successor node in the Chord ring with information matching the criterion.

17. : A computer program comprising computer program code means for performing all of the steps of any of claim 1 to 16 when said program is run on a computer.

18. : A computer program as claimed in claim 17 embodied on a computer readable medium.
